# FASCICULE DE BREVET EUROPEEN

(11) **EP 1 372 240 B1**
(45) Date de publication et mention de la délivrance du brevet: **22.07.2009**
(21) Numéro de dépôt: 03354043.6
(22) Date de dépôt: 14.05.2003
(51) Int. Cl.: H02J 9/06

(54) **Alimentation électrique sans interruption**
Unterbrechungsfreie Stromversorgung
Uninterruptible power supply

(30) Priorité: 12.06.2002 FR 0207202
(43) Date de publication de la demande: 17.12.2003
(73) Titulaire: Eaton Power Quality SAS, 38330 Montbonnot-Saint-Martin (FR)
(72) Inventeur: Fiorina, Jean-Noël, 38050 Grenoble Cédex 09 (FR); Rozand, Daniel, 38050 Grenoble Cédex 09 (FR)
(74) Mandataire: Kauffmann, Wolfgang Christian

(56) Documents cités:
- EP-A- 1 005 132
- WO-A-01/13491
- DE-A- 3 813 868
- DE-A- 4 108 259
- US-A- 5 440 179
- US-A- 5 856 712

## Description

### DOMAINE TECHNIQUE

L'invention concerne une alimentation électrique sans interruption comportant des moyens de stockage d'énergie électrique, et des moyens de transformation connectés audits moyens de stockage pour fournir à un réseau électrique aval une énergie électrique adaptée audit réseau, lesdits moyens de transformation comportant des premiers moyens de conversion haute fréquence connectés aux moyens de stockage, des moyens de redressement connectés aux premiers moyens de conversion, et des moyens de conversion basse fréquence.

### ETAT DE LA TECHNIQUE

Les alimentations sans interruption de type connus comportent un chargeur pour charger une batterie d'accumulateur, et un convertisseur pour convertir une tension continue de la batterie en tension alternative à appliquer à un réseau de distribution électrique. La demande de brevet internationale WO 01/13491 décrit un exemple d'une telle alimentation.

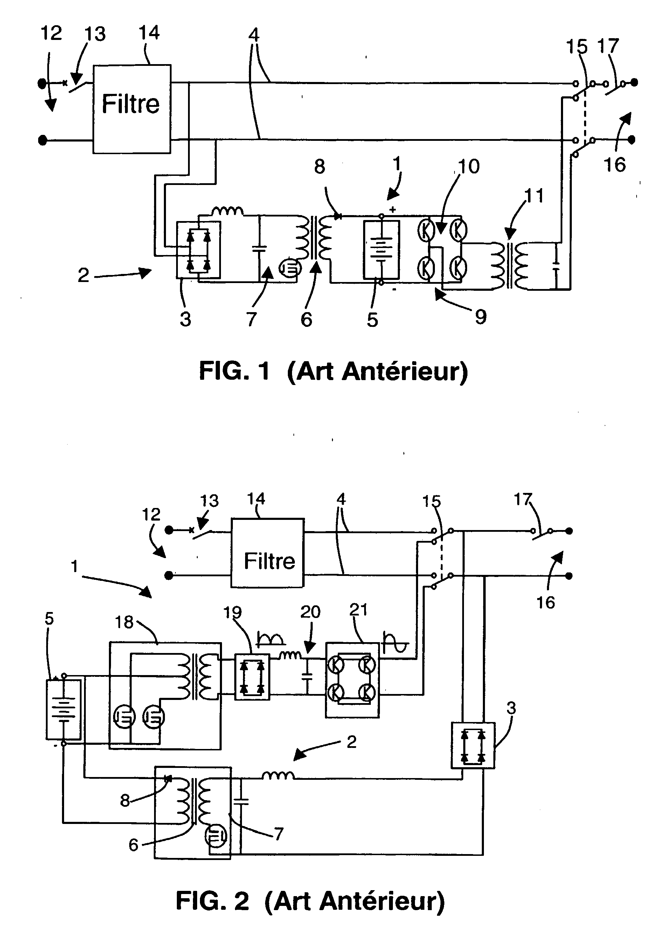

Un schéma d'une alimentation sans interruption 1 de type connu basée sur un transformateur élévateur basse fréquence est représentée sur la figure 1. L'alimentation sans interruption comporte un chargeur 2 comportant un redresseur 3 connecté à un réseau de distribution électrique aval 4, un circuit hacheur 7 commandant un transformateur 6 en alimentation à découpage. Une batterie d'accumulateur 5 est alimentée par le chargeur 2 à travers son transformateur 6 et un redresseur 8. Un convertisseur 9 connecté entre la batterie 5 et le réseau 4 convertit la tension continue de la batterie en tension alternative à appliquer au réseau 4 aval. Le convertisseur 9 comporte un onduleur 10 basse fréquence à semi-conducteurs de puissance commandant un transformateur 11 à la fréquence du réseau. L'onduleur 10 ayant une basse fréquence fondamentale peut être commandé en modulation de largeur d'impulsion haute fréquence.

Sur la figure 1, le réseau comporte une ligne d'arrivée 12, un disjoncteur 13 et un filtre 14 connectés en série sur au moins un conducteur de la ligne d'arrivé, un commutateur 15 de sortie pour commuter une ligne de sortie 16 sur une tension de la ligne d'entrée ou sur une tension fournie par l'alimentation sans interruption si la ligne d'entrée est défaillante, et un relais 17 de sortie.

Ce type d'alimentation sans interruption basée sur l'utilisation d'un transformateur 11 basse fréquence est lourde et volumineuse. De plus, une telle alimentation sans interruption nécessite un chargeur de batterie 2 indépendant.

Il existe des alimentations sans interruption basées sur un transformateur haute fréquence pour convertir la tension continue d'une batterie en une tension élevée à appliquer au réseau 4. Une telle alimentation sans interruption est représentée sur la figure 2. Cette alimentation sans interruption comporte un chargeur 2 pour charger la batterie 5, un convertisseur 18 haute fréquence connecté à la batterie pour convertir une tension continue de batterie en une tension haute fréquence, un redresseur 19 pour redresser la tension haute fréquence, un dispositif de filtrage 20 pour filtrer la tension redressée, et un convertisseur 21 basse fréquence connecté entre le dispositif de filtrage 20 ou le redresseur et le réseau pour fournir une tension sinusoïdale au réseau 4 ou à la charge.

Ces alimentations sans interruption sont moins lourdes que les alimentations à transformateurs basse fréquence, mais la puissance dissipée dans les composants des convertisseurs et des hacheurs reste très élevée.

De plus, des surtensions dues aux charges électriques notamment réactives ou à vide peuvent apparaître sur les sorties de l'alimentation sans interruption et par conséquent augmenter les contraintes sur les composants électroniques de puissance. Pour absorber cette énergie de retour et assurer une forme d'onde sinusoïdale pour tout type de charge, certaines alimentations sans interruption comportent des contrôleurs pour commander le chargeur en mode de récupération. Une telle alimentation sans interruption est décrit dans le brevet US6094363.

Cependant, la commande d'un chargeur en recyclage ne suffit pas à absorber une part importante de l'énergie de retour de charge lorsque les alimentations sans interruption sont de très forte puissance. De plus, des chargeurs de forte puissance nécessaires à cette fonction sont volumineux et coûteux.

### EXPOSE DE L'INVENTION

L'invention a pour but une alimentation électrique sans interruption améliorée évitant les problèmes de l'état de la technique notamment en ayant des contraintes électriques réduites sur les composants électroniques de puissance et en ayant une réduction notable du volume, et du poids.

L'invention est définie par les caractéristiques de la revendication 1.

Dans un mode de réalisation préférentiel, lesdits premiers moyens de conversion et lesdits seconds moyens de conversion sont réversibles, lesdits moyens de synchronisation étant destinés à commander, en mode fonctionnement réversible, les premiers moyens de conversion et les seconds moyens de conversion pour fournir aux moyens de stockage une énergie électrique provenant du dudit réseau électrique.

De préférence, lesdits premiers moyens de conversion comportent un transformateur haute fréquence comportant au moins un enroulement connecté à des composants électroniques de puissance des premiers moyens de conversion, et au moins un enroulement connecté aux seconds moyens de conversion.

Avantageusement, l'alimentation électrique sans interruption comporte une inductance connectée en sortie des moyens de redressement comportant les seconds moyens de conversion haute fréquence.

De préférence, l'alimentation électrique sans interruption comporte des troisièmes moyens de conversion basse fréquence connectés entre les moyens de redressement et ledit réseau.

Avantageusement, les troisièmes moyens de conversion basse fréquence sont associés audits seconds moyens de conversion.

Avantageusement, les moyens de redressement comportant les seconds moyens de conversion forment un redresseur synchrone.

Avantageusement, au moins un semi-conducteur de puissance des premiers moyens de conversion haute fréquence est commandé en conduction pendant la conduction d'au moins un semi-conducteur de puissance des seconds moyens de conversion haute fréquence.

De préférence, l'alimentation électrique sans interruption a un mode de fonctionnement réversible comportant une première phase de chargement de courant dans une inductance et une seconde phase de transfert de courant dans les moyens de stockage.

Dans un mode de réalisation particulier, l'alimentation électrique sans interruption comporte des moyens de contrôle pour contrôler le fonctionnement des premiers moyens de conversion, des seconds moyens de conversion, et des troisièmes moyens de conversion, lesdits moyens de contrôle comportant des entrées connectées à des moyens de mesure de tension, et des moyens de mesure de courant.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- les figures 1 et 2 représentent des schémas d'alimentations sans interruption de l'art antérieur ;
- les figures 4 à 5 représentent des schémas d'alimentations sans interruption selon des modes de réalisation de l'invention ;
- les figure 6 à 12 représentent des variantes de convertisseurs et redresseurs mis en oeuvre dans des alimentations sans interruption selon des modes de réalisation de l'invention ;
- la figure 13 représente un schéma bloc d'une alimentation électrique sans interruption selon un mode de réalisation de l'invention comportant un circuit de contrôle centralisé ;
- la figure 14 représente un schéma détaillé des circuits de puissance de circuits de conversion et de redressement synchrone d'une alimentation électrique sans interruption selon un mode de réalisation de l'invention ;
- la figure 15 représente des signaux de courant et de tension dans une alimentation électrique sans interruption selon un mode de réalisation de l'invention fonctionnant en mode onduleur ;
- la figure 16 représente des signaux de courant et de tension dans une alimentation électrique sans interruption selon un mode de réalisation de l'invention fonctionnant en mode de charge de batterie d'accumulateur.

### DESCRIPTION DETAILLEE DE MODES DE REALISATION PREFERES

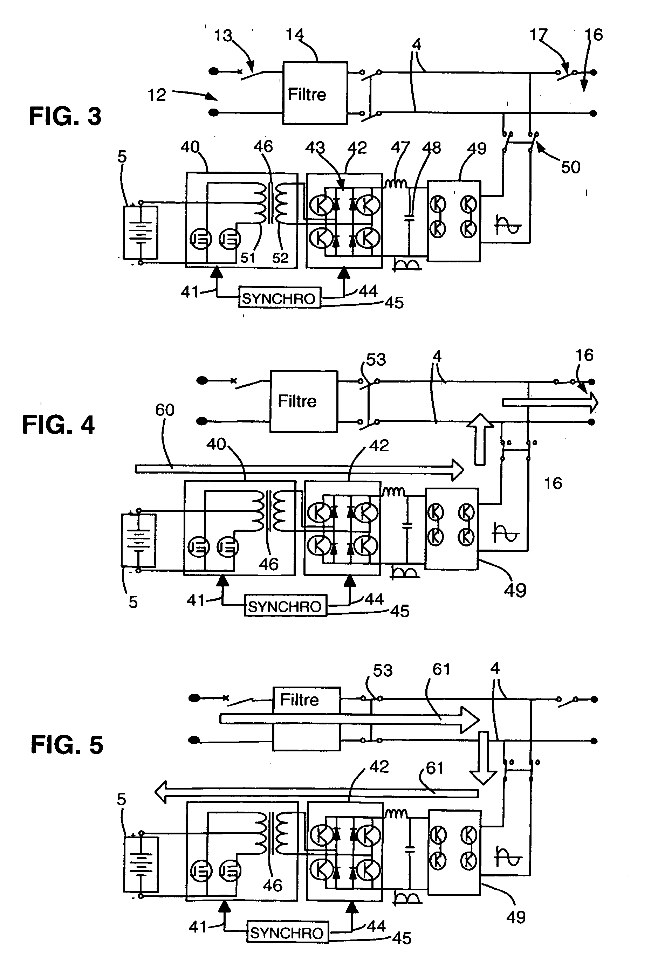

Dans une alimentation électrique sans interruption selon un mode de réalisation de l'invention représentée sur la figure 3, les moyens de transformation comportent un premier convertisseur 40 haute fréquence recevant des commandes 41 de synchronisation, et des moyens de redressement 42 comportant un second convertisseur 43 haute fréquence recevant des commandes 44 de synchronisation, et un circuit 45 de synchronisation pour fournir les commandes 41 et 44 de synchronisation au premier convertisseur 40 et au second convertisseur 43.

Ainsi, le premier convertisseur 40 et le second convertisseur 43 fonctionnent en mode synchrone. Par exemple, un premier semi-conducteur du convertisseur 40 est commandé en conduction pendant la conduction d'un premier semi-conducteur du convertisseur 43 et un second semi-conducteur du convertisseur 40 est commandé en conduction pendant la conduction d'un second semi-conducteur du convertisseur 43. Avantageusement, les premier et second semi-conducteur du convertisseur 43 fonctionnent en alternance. Le premier convertisseur 40 comporte un transformateur 46 haute fréquence ayant au moins un premier enroulement 51 connecté coté batterie aux semi-conducteurs dudit premier convertisseur 40 et au moins un enroulement 52 connecté coté réseau aux semi-conducteurs du second convertisseur 43.

L'alimentation électrique sans interruption représentée sur la figure 3 comporte une self d'induction 47, un condensateur 48 de filtrage, et un convertisseur 49 basse fréquence compatible avec la fréquence du réseau connecté en sortie du redresseur 42 fonctionnant en mode synchrone. Sur la sortie du redresseur 42 comportant le second convertisseur 43 la tension a, de préférence, une enveloppe de forme sensiblement sinusoïdale redressée. Le convertisseur 49 basse fréquence permet de fournir, par exemple, une tension alternative sinusoïdale en alternant des demi-alternances de la tension redressée fournies par le redresseur synchrone 42. Un commutateur 50 relie le convertisseur 49 au réseau 4. La self d'induction 47 et/ou le condensateur 48 peuvent être aussi connecté entre le convertisseur ou l'onduleur 49 et le réseau 4 aval.

Avantageusement, une alimentation électrique sans interruption selon un mode de réalisation de l'invention peut être commandée en mode réversible sans ajout significatif de composants. Le mode de fonctionnement réversible permet de réduire le volume et le coût de l'alimentation électrique sans interruption en évitant l'utilisation d'un chargeur 2 supplémentaire.

En mode réversible, le convertisseur 49 comporte des moyens de redressement pour redresser une tension fournie par le réseau 4. Par exemple, des diodes de protection connectées en sens inverse dans des semi-conducteurs de puissance peuvent faire fonction de redresseurs. Le convertisseur 43 du redresseur 42 convertit la tension redressée fournie par le convertisseur 49 fonctionnant en redresseur en courant haute fréquence alimentant le transformateur 46 sur un enroulement 52 coté réseau. L'enroulement coté batterie est connecté à des semi-conducteurs de puissance pour redresser et/ou réguler la charge de la batterie. En mode réversible fonctionnant en chargeur, des commandes de synchronisation peuvent permettre de réguler en tension et/ou en courant la charge de la batterie.

La figure 4 montre un flux 60 de l'énergie électrique entre la batterie 5 et le réseau 4 dans une alimentation sans interruption selon un mode de réalisation de l'invention fonctionnant en mode onduleur. Par exemple, lorsqu'un interrupteur 53 sur une ligne d'alimentation du réseau est ouvert, le flux 60 sortant de la batterie 5 traverse le convertisseur 40, le redresseur 42 synchrone, et le convertisseur 49, et alimente une charge à travers une sortie 16.

La figure 5 montre un flux 61 de l'énergie électrique entre le réseau 4 et la batterie 5 dans une alimentation sans interruption selon un mode de réalisation de l'invention fonctionnant en mode réversible ou en mode chargeur. Par exemple, dans le cas où l'interrupteur 53 est fermé et une alimentation électrique est fournie au réseau 4. Le flux 61 venant du réseau 4 traverse le convertisseur 49 fonctionnant en redresseur, le redresseur 42 comportant un convertisseur 43, et le convertisseur 40 comportant le transformateur 46 et des semi-conducteurs de puissance fonctionnant en redresseur et en régulateur, et alimente la batterie 5. Les convertisseurs 40 42 et 49 et le transformateur 46 haute fréquence ont un fonctionnement bidirectionnel qui permet de réduire le nombre de composants actifs de puissance de l'alimentation sans interruption.

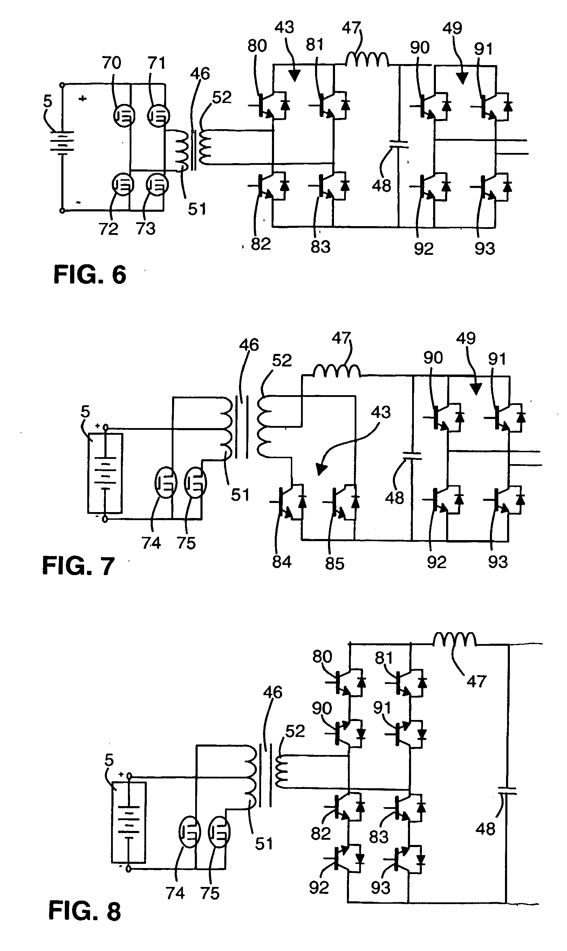

Les modes de réalisation de l'alimentation électrique sans interruption peuvent être divers, les figures 6 à 13 montrent selon les cas des schémas préférentiels.

Sur la figure 6, le transformateur 46 a un enroulement 51 simple connecté à un pont de quatre transistors 70, 71, 72, et 73 pour convertir la tension continue de la batterie en courant ou en tension alternatifs haute fréquence. L'enroulement 52 du transformateur est aussi un enroulement simple connecté à un pont de quatre transistors 80, 81, 82, 83 formant le redresseur synchrone et le second convertisseur. Chaque transistor 80 à 83 peut avoir une diode connectée en parallèle et en inverse pour participer au fonctionnement en redresseur et en convertisseur. Le convertisseur basse fréquence 49 comporte des transistors 90, 91, 92, et 93 connectés en pont. Les transistors 90 à 93 peuvent avoir des diodes connectées en parallèle et en inverse pour fonctionner en redresseur en mode réversible.

Sur la figure 7, le transformateur 46 a un enroulement 51 à point milieu connecté à deux transistors 74, 75 pour convertir la tension continue de la batterie en courant ou en tension alternatifs haute fréquence. L'enroulement 52 du transformateur est un enroulement à point milieu, les sorties extrêmes étant connectées à deux transistors 84, 85 formant le redresseur synchrone et le second convertisseur, et le point milieu étant connecté à l'inductance 47. Chaque transistor 84 et 85 peut avoir une diode connectée en parallèle et en inverse pour participer au fonctionnement en redresseur et en convertisseur. Le convertisseur basse fréquence 49 est le même que celui de la figure 6.

Sur la figure 8, le transformateur 46 a un enroulement 51 à point milieu connecté à deux transistors 74, 75 pour convertir la tension continue de la batterie en courant ou en tension alternatifs haute fréquence. L'enroulement 52 du transformateur est un enroulement simple connecté à un pont de huit transistors 80, 81, 82, 83 et 90, 91, 92, 93 formant le redresseur synchrone, le second convertisseur haute fréquence, et le convertisseur basse fréquence. Ainsi, chaque bras du pont comporte un couple de deux transistors 80, 90 ; 81, 91 ; 82, 92 et 83, 93 connecté en série. Dans ce cas, le second convertisseur haute fréquence et le convertisseur basse fréquence sont associés. Chaque transistor 80 à 83 et 90 à 93 peut avoir une diode connectée en parallèle et en inverse.

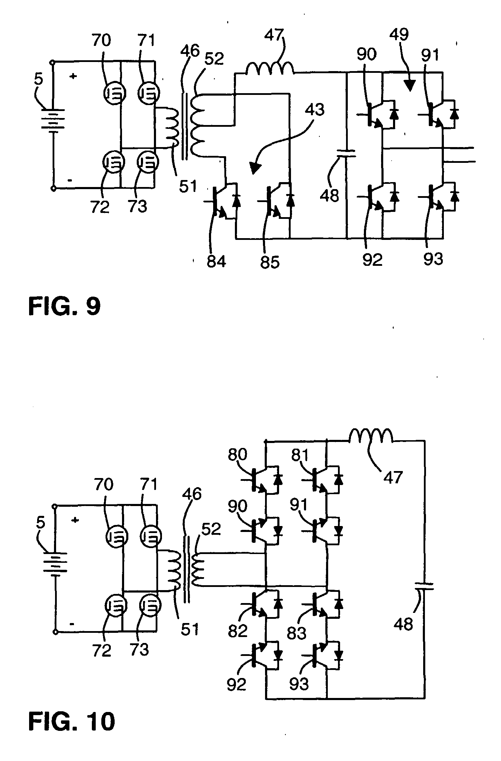

Sur la figure 9, le transformateur 46 a un enroulement 51 simple, le convertisseur 40 a un pont de quatre transistors 70 à 73, et le convertisseur 49 a un pont comme sur la figure 6, et le redresseur synchrone a deux transistors connectés a un enroulement à point milieu comme sur la figure 7.

Sur la figure 10, le transformateur 46 a un enroulement 51 simple, le convertisseur 40 a un pont de quatre transistors 70 à 73. L'enroulement 52 du transformateur est un enroulement simple connecté à un pont de huit transistors 80, 81, 82, 83 et 90, 91, 92, 93 formant le redresseur synchrone, le second convertisseur haute fréquence, et le convertisseur basse fréquence comme sur la figure 8.

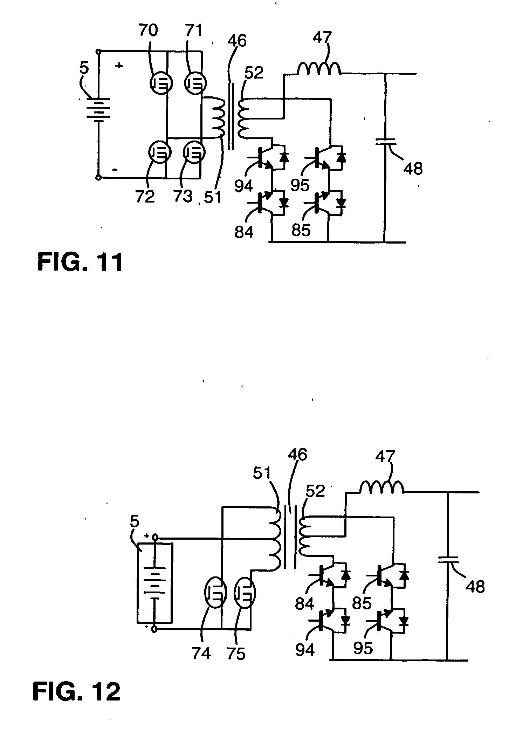

Sur les figures 11 et 12, les convertisseurs 40 sont comme les convertisseurs des figures 6 et 7 respectivement. Les transformateurs 46 ont des enroulements 52 à point milieu connecté à l'inductance 47. Les sorties extrêmes de l'enroulement 52 sont connectées à des couples de transistors 84, 94 et 85, 95 pour former le redresseur synchrone, le second convertisseur haute fréquence, et le convertisseur basse fréquence.

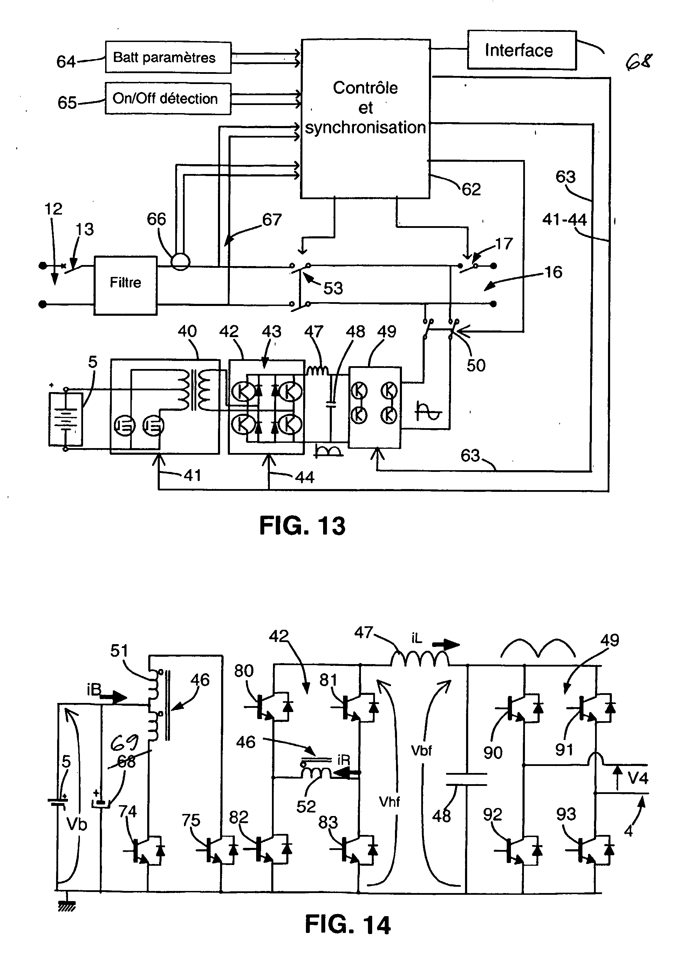

La figure 13 représente un schéma bloc d'une alimentation sans interruption comportant un circuit 62 de contrôle centralisé. Ce circuit comporte des moyens de synchronisation et fournit des commandes 41 et 44 de synchronisation respectivement au convertisseur 40 et au redresseur synchrone 42 comportant le convertisseur 43. Il fournit aussi un signal de commande 63 au convertisseur 49 pour commander les fonctions de conversion et de redressement en mode de fonctionnement réversible.

Le circuit de contrôle 62 reçoit sur une entrée des paramètres 64 de la batterie. Ces paramètres peuvent être stockés en mémoire. Ils permettent de contrôler la charge et la décharge de la batterie selon le type de batterie utilisé. Une autre entrée du circuit de contrôle permet de recevoir des informations 65 sur des états des interrupteurs, notamment le marche-arrêt connectés au réseau. Un capteur de courant 66 fournit au circuit de contrôle 62 un signal représentatif d'un courant circulant dans au moins un conducteur du réseau. Un signal 67 représentatif d'une tension dans le réseau et également fournie au circuit de contrôle 62 pour contrôler notamment le fonctionnement des divers convertisseurs.

Une sortie du circuit de contrôle peut être reliée à une interface 68 homme-machine, notamment pour contrôler les paramètres de fonctionnement, pour commander les modes de fonctionnement. L'interface 68 peut aussi être une centrale ou un ordinateur distant reliés par un réseau de communication permettant de recueillir des informations ou de transmettre des commandes.

La figure 14 représente un schéma détaillé des circuits de puissance de circuits de conversion et de redressement synchrone d'une alimentation sans interruption selon un mode de réalisation de l'invention. Sur ce schéma, une première borne de la batterie 5 est connectée à un point milieu d'un enroulement 51 coté batterie d'un transformateur 46, les extrémités de l'enroulement 51 étant connectées à des transistors 74 et 75 bouclés sur une seconde borne de la batterie. Un condensateur de découplage 69 est connecté en parallèle sur la batterie 5. Le courant sortant par la batterie ou le condensateur 69 est référencé iB.

Un enroulement 52 coté redresseur du transformateur 46 est connecté à un pont de quatre transistors 80, 81, 82, et 83 faisant office de redresseur synchrone 42 et de second convertisseur haute fréquence. Le courant circulant dans l'enroulement 52 et le redresseur est référencé iR. A la sortie du redresseur une tension est référencée Vhf, elle représente un hachage haute fréquence de la tension par les transistors 80 à 83. Une inductance 47 et un condensateur 48 sont connectés en sortie du redresseur 42. En sortie de l'inductance, une tension basse fréquence est référencée Vbf, elle a l'allure d'une sinusoïde redressée. Le courant dans l'inductance 47 est référencé iL. Un convertisseur 49 basse fréquence est connecté entre le redresseur synchrone 42, notamment à travers l'inductance 47, et le réseau 4. La tension du réseau est référencée V4. Le convertisseur 49 est composé d'un pont de quatre transistors 90, 91, 92 et 93.

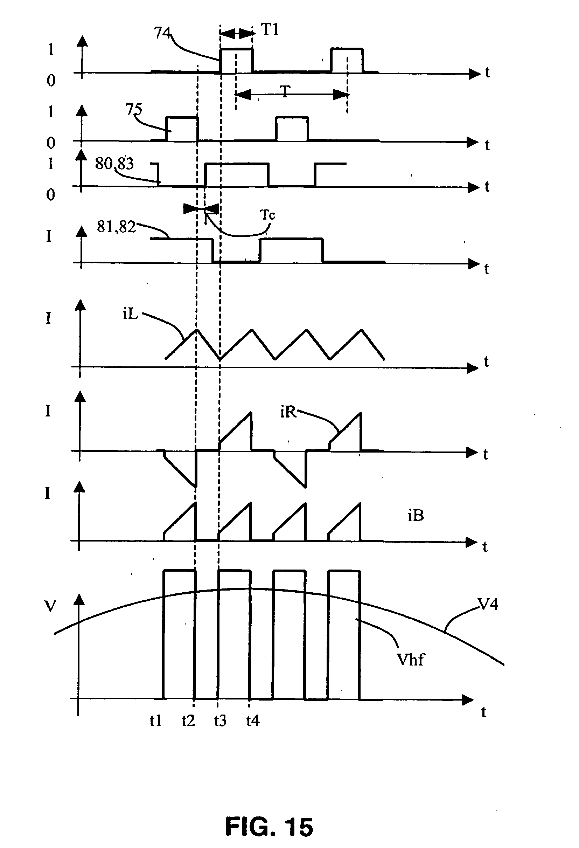

La figure 15 représente des signaux de courant et de tension dans une alimentation sans interruption selon la figure 14 fonctionnant en mode onduleur. Par exemple, entre des instants t1 et t2 les transistors 75, 81 et 82 sont conducteurs, le courant iL dans l'inductance augmente ainsi que le courant iR dans l'enroulement secondaire du transformateur dans le sens négatif et le courant iB sortant de la batterie puisqu'il y a un transfert d'énergie depuis la batterie vers le réseau. La tension Vhf est à l'état haut sa valeur de crête dépend du rapport de transformation des enroulements du transformateur 46. A l'instant t2, le transistor 75 devient bloqué et le courant iL dans l'inductance 47 décroît par une circulation en roue libre dans des diodes des transistors, les courants iR et iB deviennent nuls ou très bas, et la tension Vhf passe aussi à un niveau très bas. Les transistors 75 et le couple 81, 82 ont un fonctionnement synchrone puisqu'ils sont conducteurs en même temps. Pour éviter des risques de court circuits lors de l'enchaînement de cycles, le transistor 83 est commandé en conduction lors d'un cycle suivant après un temps Tc dit de cuvette. Ce temps Tc est de préférence de l'ordre d'une microseconde. Le transistor 82 est bloqué aussi avant la mise en conduction du transistor 74 à un instant t3.

Entre l'instant t3 et un instant t4, les transistors 74, 80 et 83 sont conducteurs en même temps pour un fonctionnement synchrone, la tension Vhf est haute et le courant iL dans l'inductance 47 augmente ainsi que les courants iR et iB. Après l'instant t4, le transistor 74 est bloqué et le courant dans l'inductance 47 décroît. Des durées de conduction T1 des transistors 74 et 75 par rapport à une période de cycle T permettent de contrôler le courant iL de manière à former une tension Vbf basse fréquence sensiblement sinusoïdale redressée en sortie de l'inductance 47.

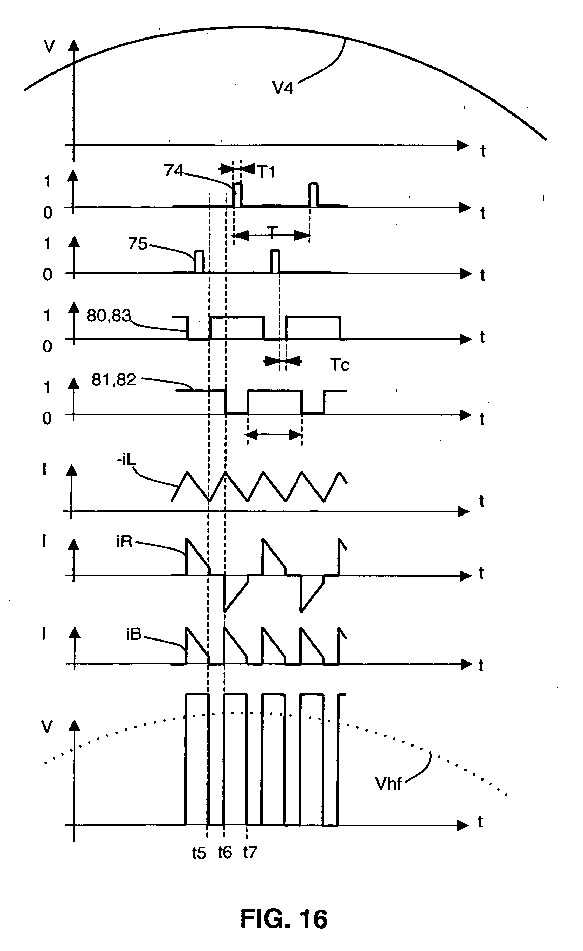

La figure 16 représente des signaux de courant et de tension dans une alimentation sans interruption selon la figure 14 fonctionnant en mode de charge de batterie d'accumulateur. Dans ce mode de fonctionnement réversible, les transistors 90 à 93 sont bloqués, les diodes associées des transistors connectées en inverse servent de redresseur pour redresser la tension alternative du réseau.

Dans ce mode de charge de batterie, le transfert d'énergie peut ce faire par exemple en deux phases. Une première phase de chargement de courant dans l'inductance 47, entre des instants t5 et t6, pendant laquelle les transistors 80 à 83 sont conducteurs. L'inductance 47 reçoit la tension redressée du réseau et le courant -iL augmente, les courants iR et iB sont nuls ou faibles. Puis une seconde phase de transfert de courant où l'énergie est transférée vers l'enroulement coté batterie. Dans la seconde phase, par exemple, les transistors 80 et 83 sont conducteurs et les transistors 81 et 82 sont bloqués, l'enroulement 46 est traversé par un courant iR fourni par l'inductance 47, et un courant iB peut être fourni à la batterie lorsque les transistors 74 ou 75, selon le sens du courant, sont conducteurs pendant une période T1. La durée de la période T1 est avantageusement utilisée pour réguler la charge de la batterie. Pendant le transfert d'énergie entre les instants t6 et t7, les courants -iL et iR sont décroissants. Entre le blocage des transistors 74 ou 75 et la mise en conduction des transistors 81, 82 et des transistors 80, 83 respectivement un temps Tc dit de cuvette est utilisé pour éviter des courts circuits.

Les courbes des signaux des figures 15 et 16 représentent des indications et des allures. Elles ne tiennent pas compte des valeurs des courants et des tensions ni des rapports de transformation des enroulements des transformateurs.

Les semi-conducteurs de puissance représentés sur les schémas sont des transistors bipolaires, mais d'autres types de transistors peuvent être utilisés, notamment des transistors à effet de champ (MOS) ou des transistors à grille isolée (IGBT).

## Revendications

1. Alimentation électrique sans interruption comportant des moyens de stockage (5) d'énergie électrique, et des moyens de transformation (18, 19, 20, 21) connectés audits moyens de stockage pour fournir à un réseau électrique aval (4) une énergie électrique adaptée audit réseau, lesdits moyens de transformation comportant des premiers moyens de conversion (40) haute fréquence connectés aux moyens de stockage (5), des moyens de redressement (40) connectés aux premiers moyens de conversion (40), comportant des seconds moyens de conversion (43) haute fréquence, l'alimentation sans interruption comportant des moyens de synchronisation (45) connectés aux premiers moyens de conversion (40) et aux moyens de redressement (42) comportant des seconds moyens de conversion (43) haute fréquence pour fournir des commandes de synchronisation (41, 44), lesdits moyens de synchronisation étant destinés à commander les premiers moyens de conversion (40) et les seconds moyens de conversion (43) **caractérisé en ce que** l'alimentation électrique sans interruption comporte des troisièmes moyens de conversion (49) basse fréquence connectés entre les seconds moyens de conversion (43) haute fréquence et ledit réseau (4) pour fournir audit réseau une énergie électrique ayant une tension basse fréquence de forme compatible avec ledit réseau électrique.

2. Alimentation électrique sans interruption selon la revendication 1 **caractérisée en ce que** lesdits premiers moyens de conversion (40) et lesdits seconds moyens de conversion (43) sont réversibles, lesdits moyens de synchronisation (45) étant destinés à commander, en mode fonctionnement réversible, les premiers moyens de conversion et les seconds moyens de conversion pour fournir aux moyens de stockage une énergie électrique provenant du dudit réseau électrique.

3. Alimentation électrique sans interruption selon l'une des revendications 1 ou 2 **caractérisée en ce que** lesdits premiers moyens de conversion comportent un transformateur (46) haute fréquence comportant au moins un enroulement (51) connecté à des composants électroniques de puissance (70-75) des premiers moyens de conversion (40), et au moins un enroulement (52) connecté aux seconds moyens de conversion (43, 80-85).

4. Alimentation électrique sans interruption selon l'une quelconque des revendications 1 à 3 **caractérisée en ce qu'**elle comporte une inductance (47) connectée en sortie des moyens de redressement (42) comportant les seconds moyens de conversion (43, 80-85) haute fréquence.

5. Alimentation électrique sans interruption selon la revendication 4 **caractérisée en ce que** les troisièmes moyens de conversion basse fréquence (49, 90-95) sont associés audits seconds moyens de conversion (43, 80-85).

6. Alimentation électrique sans interruption selon l'une quelconque des revendications 1 à 6 **caractérisée en ce que** les moyens de redressement (42) comportant les seconds moyens de conversion (43, 80-85) forment un redresseur synchrone.

7. Alimentation électrique sans interruption selon l'une quelconque des revendications 1 à 6 **caractérisée en ce qu'**au moins un semi-conducteur de puissance (70-75) des premiers moyens de conversion haute fréquence est commandé en conduction pendant la conduction d'au moins un semi-conducteur de puissance (80-85) des seconds moyens de conversion haute fréquence.

8. Alimentation électrique sans interruption selon l'une quelconque des revendications 1 à 7 **caractérisée en ce qu'**elle comporte un mode de fonctionnement réversible comportant une première phase (t5-t6) de chargement de courant (iL) dans une inductance (47) et une seconde phase de transfert (t6-t7) de courant dans les moyens de stockage (5).

9. Alimentation électrique sans interruption selon l'une quelconque des revendications 1 à 8 **caractérisée en ce qu'**elle comporte des moyens de contrôle (62) pour contrôler le fonctionnement des premiers moyens de conversion (40), des seconds moyens de conversion (43), et des troisièmes moyens de conversion (49), lesdits moyens de contrôle comportant des entrées connectées à des moyens de mesure de tension (67), et des moyens de mesure de courant (66).

## Claims

1. Uninterruptible power supply comprising storage means (5) for storing electrical power, and transforming means (18, 19, 20, 21) connected with the storage means to provide a downstream electricity network (4) with electrical power suitable for the electricity network, wherein said transforming means comprise first high-frequency converting means (40) connected with the storage means (5), rectifying means (42) connected with the first converting means (40), comprising second high-frequency converting means (43); the uninterruptible power supply comprising synchronizing means (45) connected with the first converting means (40) and with the rectifying means (42) comprising second high-frequency converting means (43) to provide synchronisation commands (41, 44), wherein the synchronizing means serve to control the first converting means (40) and the second converting means (43), **characterised in that** the uninterruptible power supply comprises third low-frequency converting means (49) interconnected between the second high-frequency converting means (43) and said electricity network (4) to provide said electricity network with electrical power with low-frequency voltage compatible with said electricity network.

2. Uninterruptable power supply in accordance with claim 1 **characterised in that** the first converting means (40) and second converting means (43) are reversible, with said synchronizing means (45) controlling, in a reversible way, the first converting means and the second converting means in order to provide the storage means with electrical energy from said electricity network.

3. Uninterruptable power supply in accordance with claim 1 or 2 **characterised in that** said first converting means comprise a high-frequency transformer (46) with at least one coil (51) connected to the electrical power components (70-75) of the first converting means (40), and at least one coil (52) connected to the second converting means (43, 80-85).

4. Uninterruptible power supply in accordance with one of claims 1- 3 **characterised in that** it comprises an inductance (47) connected to the output of the rectifying means (42) including the second high-frequency converting means (43, 80-85).

5. Uninterruptible power supply in accordance with claim 4 **characterised in that** the third low-frequency converting means (49, 90-95) are linked with said second converting means (43, 80-85).

6. Uninterruptable power supply in accordance with one of claims 1 - 6 **characterised in that** rectifying means (42) comprising the second converting means (43, 80-85) acts as synchronised rectifying means.

7. Uninterruptible power supply in accordance with one of claims 1-6 **characterised in that** at least one power semi-conductor device (70-75) of the first high-frequency converting means is commanded by the conduction of at least one power semi-conductor device (80-85) of the second high-frequency converting means.

8. Uninterruptible power supply in accordance with one of claims 1-7 **characterised in that** it comprises a reversible operating mode with a first phase (t5-t6) of current charging (iL) in an inductance (47) and a second phase of transfer (t6-t7) of current to the storage means (5).

9. Uninterruptible power supply in accordance with one of claims 1-8 **characterised in that** it comprises control means (62) to control the functioning of the first converting means (40), second converting means (43) and third converting means (49), with said control means having inputs connected to the devices to measure voltage (67) and current (66).

## Patentansprüche

1. Unterbrechungsfreie Stromversorgung, aufweisend Speichermittel (5) für elektrische Energie und Umwandlungsmittel (18, 19, 20, 21), die mit den Speichermitteln verbunden sind, um elektrische Energie in ein nachgeschaltetes Stromnetz (4) einzuspeisen, welche an das Stromnetz angepasst ist, wobei die erste Hochfrequenz-Umwandlungsmittel (40) aufweisenden Umwandlungsmittel mit den Speichermitteln (5) verbunden sind, und Gleichrichtungsmittel (42) aufweisen, die mit den zweite Hochfrequenz-Umwandlungsmittel (43) aufweisenden ersten Umwandlungsmitteln verbunden sind (40);
wobei die unterbrechungsfreie Stromversorgung Synchronisationsmittel (45) aufweist, die mit den ersten Umwandlungsmitteln (40) und den Gleichrichtungsmitteln (42) verbunden sind und zweite Hochfrequenz-Umwandlungsmittel (43) aufweisen, welche zur Abgabe von Synchronisationsbefehlen (41, 44) bestimmt sind, wobei die Synchronisationsmittel dazu dienen, die ersten Umwandlungsmittel (40) und die zweiten Umwandlungsmittel (43) anzusteuern, **dadurch gekennzeichnet, dass** die unterbrechungsfreie Stromversorgung dritte Niedrigfrequenz-Umwandlungsmittel (49) aufweist, die mit den zweiten Hochfrequenz-Umwandlungsmitteln (43) und dem Stromnetz (4) verbunden sind, um in das Stromnetz elektrische Energie mit niederfrequenter Spannung einzuspeisen, welche mit dem Stromnetz kompatibel ist.

2. Die unterbrechungsfreie Stromversorgung nach Patentanspruch 1 ist **dadurch gekennzeichnet, dass** die ersten Umwandlungsmittel (40) und die genannten zweiten Umwandlungsmittel (43) reversibel sind, und diese Synchronisationsmittel (45) im reversiblen Betriebsmodus zur Ansteuerung der ersten Umwandlungsmittel und der zweiten Umwandlungsmittel dienen, um aus diesem Stromnetz elektrische Energie in die Speichermittel zu leiten.

3. Die unterbrechungsfreie Stromversorgung nach einem der Patentansprüche 1 oder 2 ist **dadurch gekennzeichnet, dass** diese ersten Umwandlungsmittel einen Hochfrequenz-Transformator (46) enthalten, der mindestens eine Spule enthält (51), die an die leistungsfähigen elektronischen Komponenten (70-75) der ersten Umwandlungsmittel (40) angeschlossen ist, und mindestens eine Spule (52), die an die zweiten Umwandlungsmittel angeschlossen ist (43, 80-85).

4. Die unterbrechungsfreie Stromversorgung nach einem der Patentansprüche 1 bis 3 ist **dadurch gekennzeichnet, dass** sie eine Induktivität (47) umfasst, die beim Ausgang der Gleichrichtungsmittel (42) angeschlossen ist und die zweiten Hochfrequenz-Umwandlungsmittel (43, 80-85) umfasst.

5. Die unterbrechungsfreie Stromversorgung nach Patentanspruch 4 ist **dadurch gekennzeichnet, dass** die dritten Niedrigfrequenz-Umwandlungsmittel (49, 90-95) mit den genannten zweiten Umwandlungsmittel verbunden sind (43, 80-85).

6. Die unterbrechungsfreie Stromversorgung nach einem der Patentansprüche 1 bis 6 ist **dadurch gekennzeichnet, dass** die Gleichrichtungsmittel (42), die die zweiten Umwandlungsmittel (43, 80-85) enthalten, synchrone Gleichrichtungsmittel bilden.

7. Die unterbrechungsfreie Stromversorgung nach einem der Patentansprüche 1 bis 6 ist **dadurch gekennzeichnet, dass** mindestens ein leistungsfähiger Halbleiter (70-75) der ersten Hochfrequenz-Umwandlungsmittel in der Leitung angesteuert wird, während der Leitung von mindestens einem leistungsfähigen Halbleiter (80-85) der zweiten Hochfrequenz-Umwandlungsmittel.

8. Die unterbrechungsfreie Stromversorgung nach einem der Patentansprüche 1 bis 7 ist **dadurch gekennzeichnet, dass** sie einen reversiblen Betriebsmodus enthält, der aus einer ersten Phase (t5-t6) zur Stromaufladung (iL) in einer Induktivität (47) und einer zweiter Phase zur Stromübertragung (t6-t7) in die Speichermittel (5) umfasst.

9. Die unterbrechungsfreie Stromversorgung nach einem der Patentansprüche 1 bis 8 ist **dadurch gekennzeichnet, dass** sie Steuerungsmittel enthält (62), zur Steuerung des Betriebs der ersten Umwandlungsmittel (40), der zweiten Umwandlungsmittel (43), und der dritten Umwandlungsmittel (49), wobei diese Steuerungsmittel an Spannungsmessgeräten (67) und Strommessgeräten (66) angeschlossen sind.
